# EUROPÄISCHE PATENTANMELDUNG

(11) **EP 2 468 134 A1**
(43) Veröffentlichungstag der Anmeldung: **27.06.2012**
(21) Anmeldenummer: 11450156.2
(22) Anmeldetag: 22.12.2011
(51) Int. Cl.: A47B 47/04, F16B 12/04, F16B 12/24

(54) **Korpus für Möbel**

(30) Priorität: 23.12.2010 AT 21382010
(71) Anmelder: TEAM 7 Natürlich Wohnen GmbH, 4910 Ried im Innkreis (AT)
(72) Erfinder: Hangler, Alois, 4850 Timelkan (AT); Lindlbauer, Christoph, 4910 Ried (AT); Endholzer, Thomas, 4720 Neumarkt/H. (AT)
(74) Vertreter: Wildhack & Jellinek

(57) **Zusammenfassung**

Die Erfindung betrifft einen Korpus erstellt mit zueinander rechtwinkelig angeordneten und miteinander einen Eckbereich ausbildenden, verbundenen ersten und zweiten Brettern oder Platten (1, 2).

Erfindungsgemäß ist vorgesehen, dass die Platten (1, 2) längs ihrer frontseitigen Schmalseiten (3) eine Fase oder Schrägfläche (4) ausbilden, die ins Innere des Korpus ansteigt,
- dass die ersten Platten (1) an ihren im Eckbereich liegenden Schmalseiten (13) einen Überstand (14) mit einer Innenfläche (9) aufweisen, deren Breite (B) der Breite (B) der frontseitigen Schmalseite (3) der zweiten Platten (2) entspricht,
- dass die zweiten Platten (2) an ihren im Eckbereich liegenden Schmalseiten (15) eine an die Breite (B) der Innenfläche (9) des Überstandes (14) angepasste Anlagefläche (11) für die Innenfläche (9) des Überstandes (14) aufweisen,
- dass anschließend an die Innenfläche (9) und anschließend an die Anlagefläche (11) der jeweiligen Platte (1, 2) aneinander angepasste Gehrungsflächen (10, 12) ausgebildet sind. (Fig. 1)

## Beschreibung

Die Erfindung betrifft einen Korpus für Möbel, insbesondere für Regalmöbel, der mit rechtwinkelig zueinander angeordneten und miteinander verbundenen Platten erstellt ist, so wie dies im Oberbegriff des Patentanspruches 1 angegeben ist.

Ziel der Erfindung ist die Erstellung eines einfach herstellbaren, kompakt und stabil gestalteten und ein optisch ansehnliches Aussehen besitzenden Korpus bzw. Möbels.

Diese Ziele werden bei einem Korpus bzw. Möbel der eingangs genannten Art dadurch erreicht,
- dass die Platten, vorzugsweise beidseits, längs ihrer frontseitigen Schmalseiten eine Fase oder Schrägfläche ausbilden, die ins Innere des Korpus ansteigt,
- dass die ersten Platten an ihren im Eckbereich liegenden Schmalseiten einen Überstand mit einer Innenfläche aufweisen, deren Breite der Breite der frontseitigen Schmalseite der zweiten Platten entspricht,
- dass die zweiten Platten an ihrer im Eckbereich liegenden Schmalseiten eine an die Breite der Innenfläche des Überstandes angepasste Anlagefläche für die Innenfläche des Überstandes aufweisen,
- dass anschließend an die Innenfläche und anschließend an die Anlagefläche der jeweiligen Platte aneinander angepasste Gehrungsflächen ausgebildet sind und
- dass im Eckbereich des Korpus die Innenfläche des Überstandes stumpf an die Anlagefläche und die Gehrungsflächen der ersten und zweiten Platte aneinander angelegt und fest verbunden, vorzugsweise verleimt oder verklebt, sind.

Derartige Korpusse werden aus den üblichen Hölzern hergestellt, insbesondere ist vorgesehen, dass die Platten oder Bretter aus Massivholz, Leimholz oder beschichteten Spanplatten gebildet sind.

Eine feste und einfach und exakt herstellbare Verbindung der Platten ergibt sich, wenn die beiden Platten mit Dübeln, vorzugsweise Holzdübeln, verbunden sind, die in Ausnehmungen eingesetzt sind, die zumindest mit einem Teil, vorzugsweise dem größeren Teil, ihres Querschnitts innerhalb der Gehrungsflächen gelegen sind.

Ein besonders guter Halt der Eckverbindungen im Bereich der Frontfläche ergibt sich, wenn die Ausnehmung für den der frontseitigen Schmalseite der zweiten Platte nächstliegenden Dübel mit dem größeren Teil ihres Querschnitts in der Anlagefläche und in der Innenfläche des Überstandes liegt.

Ein einfaches Einfügen und Entnehmen von Gegenständen in den mit einem derartigen Korpus erstellten Regalen bzw. ein ansehnliches optisches Äußeres wird erreicht, wenn sich die Fase oder die Schrägfläche ausgehend von der frontseitigen Schmalseite ansteigend über einen Abschnitt ins Innere des Korpus erstreckt, wobei die Tiefe der Fase das 1 bis 6-fache, vorzugsweise 1 bis 4-fache, der Breite der frontseitigen Schmalseite der Platten beträgt.

Für die Herstellung und für die Optik ist es von Vorteil, wenn die Breite der Innenfläche des Überstandes der ersten Platte der Breite der frontseitigen Schmalseite der zweiten Platte entspricht.

Für den stabilen Zusammenhalt und Aufbau des Korpus ist es von Vorteil, wenn die Achsen der Dübel parallel zur Längserstreckung der zweiten Platte ausgerichtet sind und/oder die Dübel in die zweite Platte eingebunden sind und die überstehenden Dübelabschnitte von den in der ersten Platte ausgebildeten Ausnehmungen aufgenommen sind. Eine hohe Verbindungsfestigkeit und ein hoher Widerstand gegen Beanspruchungen ergibt sich, wenn die Anlagefläche, die Innenfläche und die Gehrungsflächen mit einer Toleranz von ±0,15mm exakt hergestellt und geschliffen sind.

Ein erfindungsgemäßer Korpus ist vielfältig einzusetzen und es kann vorgesehen sein, dass jeweils zwei erste und zweite Platten gegenüberliegende Umfangswände eines Korpus ausbilden und senkrecht und/oder waagrecht verlaufende eingesetzte und/oder eingedübelte Steh- oder Fachbretter umschließen.

Für die Optik und für eine einfache Herstellung derartiger Korpusse ist es von Vorteil, wenn die ersten und zweiten Platten gleiche Dicke und/oder Breite besitzen.

Im Folgenden wird die Erfindung beispielsweise anhand der Zeichnungen näher erläutert. Fig. 1 zeigt eine einfach aufgebaute Ausführungsform eines erfindungsgemäßen Korpus. Fig. 2 zeigt einen Eckbereich eines erfindungsgemäßen Korpus. Fig. 3 zeigt die Eckverbindung von zwei Platten vor ihrem Zusammenfügen. Fig. 4 zeigt die beiden Platten bei einer Eckverbindung kurz vor deren Verbindung. Fig. 5 zeigt eine Detailansicht.

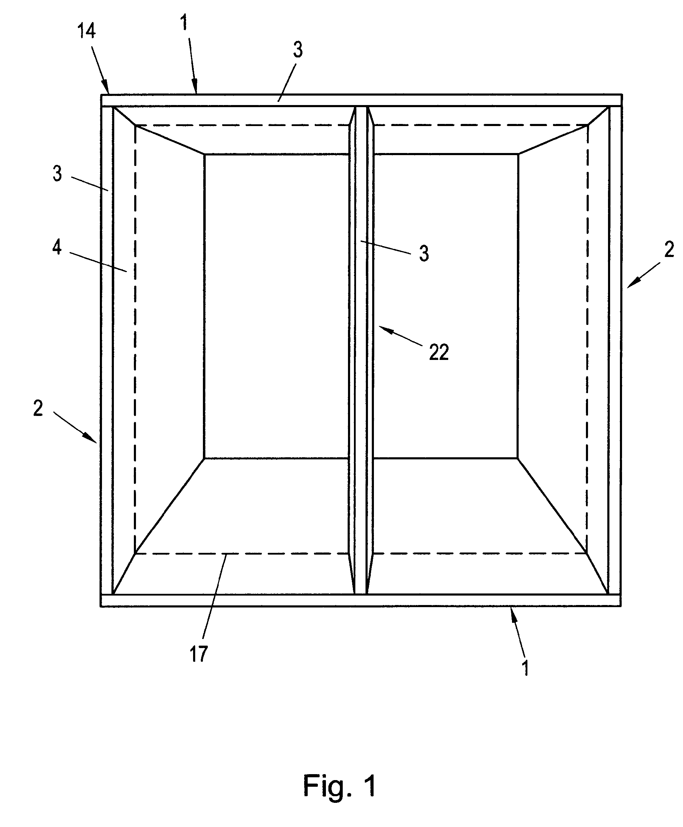

Fig. 1 zeigt einen Korpus, der mit zwei ersten Platten 1 und zwei zweiten Platten 2 erstellt ist, die im vorliegenden Fall gleichlang sind und somit einen im Schnitt quadratischen Korpus darstellen. Zwischen den Platten 1 ist eine weitere Platte bzw. ein Stehbrett 22 vertikal verlaufend eingesetzt. In den Eckbereichen überragen die Platten 1 die Platten 2 mit einem Überstand 14. Längs der Vorderfronten bzw. frontseitigen Schmalflächen 3 der einzelnen Platten 1, 2 liegt eine ansteigende Schrägfläche 4, die in das Innere des Korpus bis zu einer Kante 17 führt, d.h. bis zu einem Bereich der Platten 1, 2, in dem diese ihre vorgegebene Dicke erreichen. Die Vorderfront bzw. Schmalseite 3 der Platten 1,2 ist somit von beträchtlich geringerer Stärke als die Platten 1, 2 selbst.

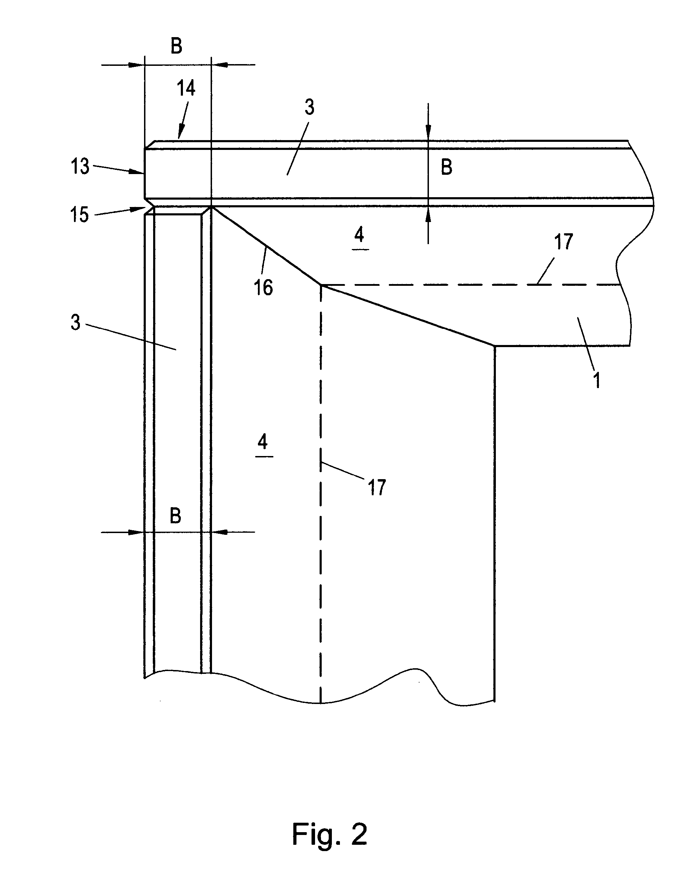

Wie aus Fig. 2 ersichtlich ist, liegt ein Überstand 14 der Platte 1 auf der Schmalseite 15 der Platte 2 auf. Die beiden Fasen bzw. Schrägflächen 4 der Platten 1, 2 stoßen längs der Gehrungslinie 16 aneinander, wobei die Gehrungslinie 16 ins Innere des Korpus bis zu der strichliert eingezeichneten Linie 17 verläuft, an der die Schrägfläche 4 endet und ab der die Innen- und Außenfläche der jeweiligen Platte 1, 2 parallel zueinander verlaufen. Die Breite B2 des Überstandes 14 entspricht der Breite B1 der Vorderfläche bzw. Schmalseite 3 der Platte 2.

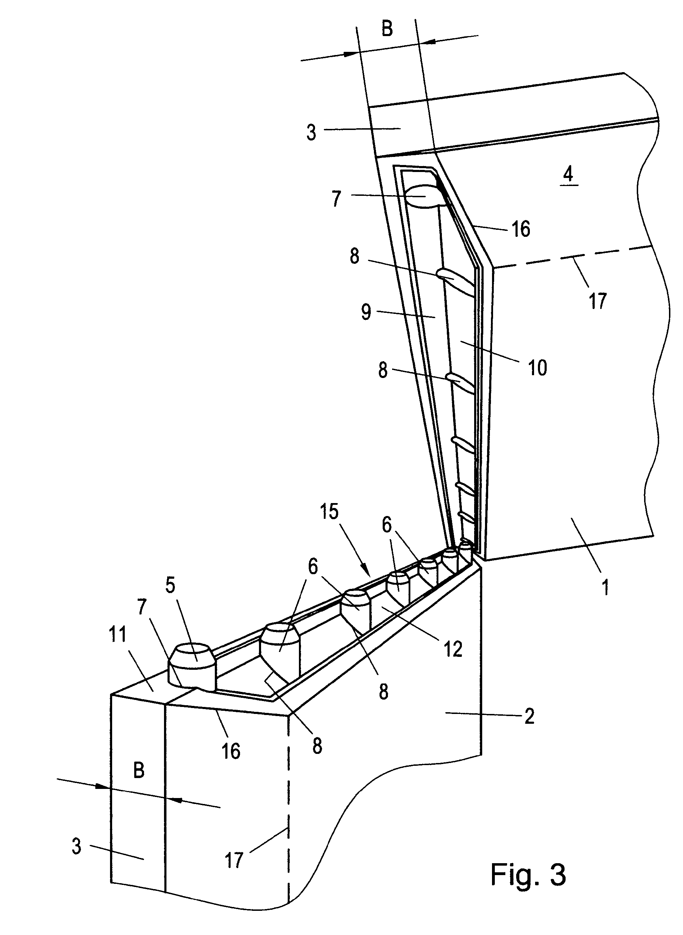

In Fig. 3 sind die jeweiligen Schmalseitenfläche der Platten 1, 2 dargestellt. Die Platte 2 zeigt eine Anlagefläche 11, deren Breite der Breite B2 der Innenfläche 9 des Überstandes 14 entspricht. Damit können die Anlagefläche 11 und die Innenfläche 9 stumpf miteinander verbunden werden.

Die Platte 2 trägt Dübel 5, 6. Die Ausnehmungen für die Dübel 5, 6 liegen derart, dass diese in einer Schräg- bzw. Gehrungsfläche 12 angeordnet sind bzw. mit dem größten Teil ihres Querschnitts in dieser Schräge- bzw. Gehrungsfläche 12 liegen. Lediglich der erste, der Vorderfront 3 nächstliegende Dübel 5 liegt mit seiner Ausnehmung zum größten Teil in der Anlagefläche 11. Entsprechend sind in einer ebenfalls geneigt verlaufenden Gehrungsfläche 10 an der Schmalseite der Platte 1 Ausnehmungen 8 zur Aufnahme der Dübel 6 vorgesehen, die mit dem größten Teil ihres Querschnittes in der Gehrungsfläche 10 liegen. Die Ausnehmung 7 für den der Vorderfront 3 nahen Dübel 5 liegt zum größten Teil in der Innenfläche 9 des Überstandes 14.

Die Gehrungsflächen 10, 12 sind auf Gehrung geschnitten bzw. gearbeitet und der Gehrungsstoß verläuft bis zur Endkante 17 der Schrägfläche 4.

Die Gehrungsfläche 10 beginnt anschließend an die Innenfläche 9 des Überstandes 14 bzw. die Gehrungsfläche 12 beginnt anschließend an die Anlagefläche 11 der Platte 2. Im Bereich der Vorderfronten bzw. vorderen Schmalseiten 3 der beiden Platten 1, 2 verläuft die Stoßlinie 16 der beiden Gehrungsflächen 10, 12 schräg ins Innere des Korpus bis zu dem Zusammentreffen der Kanten 17, an denen die Schrägflächen 4 in die innenliegenden Plattenoberflächen übergehen.

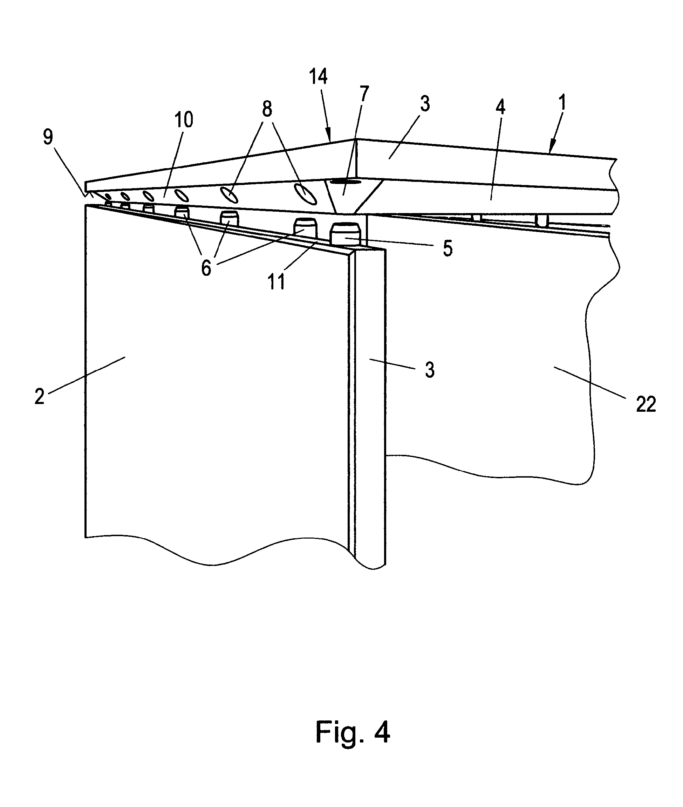

Fig. 4 zeigt den Zusammenbau der Platten 1, 2 im Eckbereich. Die Gehrungsfläche 10 wird in Anlage an die Gehrungsfläche 12 gebracht. Die Dübel 5, 6 werden in die Ausnehmungen 7, 8 eingesetzt. Die Innenfläche 9 des Überstandes 14 wird in der Anlage an die Anlagefläche 11 der Schmalseite 15 der Platte 2 gebracht. Fig. 4 zeigt des weiteren auch, ein in der Mitte des Korpus eingebrachtes, senkrecht verlaufendes Stehbrett 22.

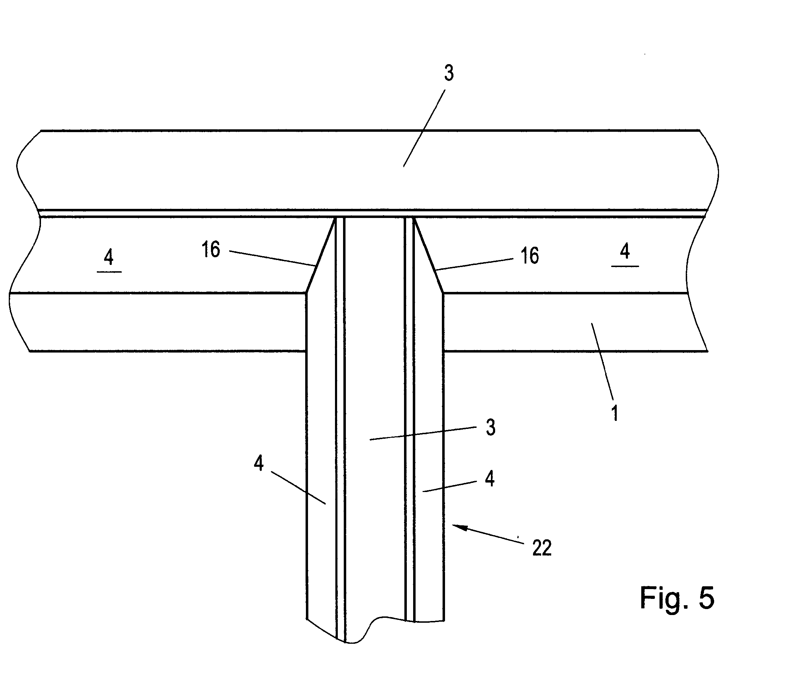

Fig. 5 zeigt eine Verbindung der eingesetzten Platte bzw. des Stehbrettes 22 mit der Platte 1. Man erkennt wiederum die Schrägflächen 4, die von den Vorderfronten bzw. Schmalseiten 3 ausgehen und längs der Gehrungslinien 16 aneinander stoßen. Die senkrecht verlaufenden Platten Stehbretter 22 werden vorteilhafterweise mit Dübelverbindungen eingesetzt und sind mit den selben Fehlertoleranzen hergestellt, wie die Platten 1, 2.

Der Überstand 14 an den Ecken hat vorteilhafterweise ein Maß von 10mm. Im Bereich der auf über eine Tiefe von 30mm abgeschrägten Fase an der Vorderkante sind die Platten auf Gehrung geschnitten und verbunden. Die Holzdübel greifen in die beiden Platten 1, 2 ein. Zusätzlich zur Verleimung dieser Holzdübel wird die Eckverbindung auch noch auf den aneinander anliegenden Flächen 9, 11 und den Gehrungsflächen 10, 12 verleimt, sodass eine hohe Verbindungsfestigkeit entsteht. Im Mittelteil des Korpus werden die waagrechten Platten 1 noch durch ein Stehbrett 22 verbunden. Weiters könnten zusätzlich zu den Mittelteilen bzw. Stehbrettern 22 auch noch waagrechte Zwischenböden eingesetzt werden.

Die Korpusse werden maßgenau und möglichst toleranzfrei gefertigt und verbunden. Vor allem beim Einsetzen der Stehbretter und Zwischenböden kann es zu großen Klüften oder Ungenauigkeiten kommen, wenn die vier Korpusaußenteile nicht exakt gefertigt bzw. keine exakte Stärke aufweisen.

Diese Genauigkeit erreicht man durch exakten Schliff der Flächen auf +/-0,15mm vor der CNC-Bearbeitung und durch exakte Werkzeuge für die Bearbeitung an der schrägen Vorderkante bzw. geneigten Fase, die eine nachträgliches Schleifen nicht mehr erfordern.

## Patentansprüche

1. Korpus erstellt mit zueinander rechtwinkelig angeordneten und miteinander einen Eckbereich ausbildenden, verbundenen ersten und zweiten Brettern oder Platten (1, 2), **dadurch gekennzeichnet,**
- **dass** die Platten (1, 2), vorzugsweise beidseits, längs ihrer frontseitigen Schmalseiten (3) eine Fase oder Schrägfläche (4) ausbilden, die ins Innere des Korpus ansteigt,
- **dass** die ersten Platten (1) an ihren im Eckbereich liegenden Schmalseiten (13) einen Überstand (14) mit einer Innenfläche (9) aufweisen, deren Breite (B2) der Breite (B1) der frontseitigen Schmalseite (3) der zweiten Platten (2) entspricht,
- **dass** die zweiten Platten (2) an ihren im Eckbereich liegenden Schmalseiten (15) eine an die Breite (B2) der Innenfläche (9) des Überstandes (14) angepasste Anlagefläche (11) für die Innenfläche (9) des Überstandes (14) aufweisen,
- **dass** anschließend an die Innenfläche (9) und anschließend an die Anlagefläche (11) der jeweiligen Platte (1, 2) aneinander angepasste Gehrungsflächen (10, 12) ausgebildet sind und
- **dass** im Eckbereich des Korpus die Innenfläche (9) des Überstandes (14) stumpf an die Anlagefläche (11) angelegt und die Gehrungsflächen (10, 12) der ersten und zweiten Platte (1, 2) aneinander angelegt sind und alle Flächen (9, 11; 10, 12) fest verbunden, vorzugsweise verleimt oder verklebt, sind.

2. Korpus nach Anspruch 1, **dadurch gekennzeichnet, dass** die beiden Platten (1, 2) mit Dübeln (6), vorzugsweise Holzdübeln, verbunden sind, die in Ausnehmungen (8) eingesetzt sind, die zumindest mit einem Teil, vorzugsweise dem größeren Teil, ihres Querschnitts innerhalb der Gehrungsflächen (10, 12) gelegen sind.

3. Korpus nach Anspruch 1 oder 2, **dadurch gekennzeichnet, dass** die Ausnehmung (7) für den der frontseitigen Schmalseite (3) der zweiten Platte (2) nächstliegenden Dübel (5) mit dem größeren Teil ihres Querschnitts in der Anlagefläche (11) und in der Innenfläche (9) des Überstandes (14) liegt.

4. Korpus nach einem der Ansprüche 1 bis 3, **dadurch gekennzeichnet, dass** die Platten (1, 2) aus Massivholz, Leimholz oder beschichteten Spanplatten gebildet sind.

5. Korpus nach einem der Ansprüche 1 bis 4, **dadurch gekennzeichnet, dass** sich die Fase oder die Schrägfläche (4) ausgehend von der frontseitigen Schmalseite (3) ansteigend über einen Abschnitt ins Innere des Korpus erstreckt, dessen Tiefe das 1 bis 4-fache der Breite der Schmalseite (3) beträgt.

6. Korpus nach einem der Ansprüche 1 bis 5, **dadurch gekennzeichnet, dass** die Achsen der Dübel (5, 6) parallel zur Längserstreckung der zweiten Platte (2) ausgerichtet sind.

7. Korpus nach einem der Ansprüche 1 bis 6, **dadurch gekennzeichnet, dass** die Dübel (5, 6) in die zweite Platte (2) eingebunden sind und die überstehenden Dübelabschnitte von den in der ersten Platte (1) ausgebildeten Ausnehmungen (7, 8) aufgenommen sind.

8. Korpus nach einem der Ansprüche 1 bis 7, **dadurch gekennzeichnet, dass** die Anlagefläche (11), die Innenfläche (9) und die Gehrungsflächen (10, 12) mit einer Toleranz von ±0,15mm exakt hergestellt und geschliffen sind.

9. Korpus nach einem der Ansprüche 1 bis 8, **dadurch gekennzeichnet, dass** jeweils zwei erste und zweite Platten (1, 2) gegenüberliegende Umfangswände des Korpus ausbilden und senkrecht und/oder waagrecht verlaufende eingesetzte und/oder eingedübelte Steh- oder Fachbretter (22) umschließen.

10. Korpus nach einem der Ansprüche 1 bis 9, **dadurch gekennzeichnet, dass** die ersten und zweiten Platten (1, 2) gleiche Tiefe und/oder Breite (B1) besitzen.
